# FASCICULE DE BREVET EUROPEEN

(11) **EP 2 043 489 B1**
(45) Date de publication et mention de la délivrance du brevet: **13.07.2011**
(21) Numéro de dépôt: 07787872.6
(22) Date de dépôt: 25.07.2007
(51) Int. Cl.: A47J 31/36

(54) **DISPOSITIF ET PROCEDE DE PRODUCTION DE BOISSON PAR INFUSION**
VORRICHTUNG UND VERFAHREN ZUM AUFBRÜHEN EINES GETRÄNKS
DEVICE AND PROCESS FOR BREWING A DRINK

(30) Priorité: 26.07.2006 FR 0606818
(43) Date de publication de la demande: 08.04.2009
(73) Titulaire: COMPAGNIE MEDITERRANEENNE DES CAFES S.A., 06510 Carros (FR)
(72) Inventeur: BLANC, Jean-Pierre, F-06000 Nice (FR); FERRIER, Christian, F-06000 Nice (FR)
(74) Mandataire: Decobert, Jean-Pascal
(86) Numéro de dépôt international: PCT/EP2007/057642
(87) Numéro de publication internationale: WO 2008/012316

(56) Documents cités:
- WO-A-2005/004683

## Description

La présente invention concerne un dispositif de production de boissons par infusion d'un produit contenu dans un conditionnement.

Elle trouve particulièrement son application dans le domaine des machines à café de type ESPRESSO. Elle pourra également s'appliquer à la production de boisson à partir d'autres matières telle du thé.

Les machines à café, surtout dans le domaine domestique, ont connu une évolution particulièrement importante au cours de la dernière décennie. En effet, des conditionnements unitaires et jetables de café moulu se sont fortement développés de sorte à faciliter l'utilisation des machines à café. L'utilisateur n'a plus aucun contact direct avec le café moulu, ce qui facilite grandement la manipulation de la mouture et permet la production d'une boisson dans des conditions plus propres.

C'est ainsi que le document WO-A-9517121 du même demandeur a déjà proposé une machine automatique pour l'infusion de boissons chaudes comportant une partie fixe et une partie mobile aptes à être rapprochées ou éloignées pour fermer ou ouvrir une chambre d'infusion au centre de laquelle est reçu un conditionnement contenant de la mouture de café. Dans le cas de cette antériorité, l'introduction du conditionnement s'effectue par un guidage par l'intermédiaire de deux glissières aptes à retenir le conditionnement dans une position sensiblement verticale par l'intermédiaire de son pourtour. Une butée est également prévue en position inférieure de la chambre d'infusion de sorte à retenir le conditionnement ou à autoriser son éjection par gravité lorsque la butée est escamotée.

Cette machine donne globalement satisfaction et notamment assure une grande praticité d'emploi de par le mode d'introduction et d'éjection réalisé. Cependant, elle met en oeuvre une pluralité de composants mécaniques formant un ensemble cinématique assez complexe.

Le document WO 2005/004683-A1- présente un dispositif d'extraction de capsules.

Suivant une possibilité, la capsule est maintenue par un système de butée escamotable entraînant les mêmes inconvénients que WO-A-9517121.

Suivant une autre possibilité, ce dispositif tire parti de la forme conique de la capsule pour la déplacer vers le bas lorsqu'elle est poussée longitudinalement. Le système implique de mettre en oeuvre un double mouvement pour la capsule ce qui est complexe et réalisable seulement avec des capsules très spécifiques. Deux autres documents représentant l'art antérieurs sont : WO 2005/058 111-A1 et WO 2008/014 30-A1.

Il existe donc un besoin de proposer un dispositif de production de boissons amélioré notamment pour simplifier les étapes de coopération entre le conditionnement et la chambre d'infusion au cours de la production de boisson en particulier durant les phases d'introduction, d'infusion et d'éjection.

La présente invention s'inscrit dans ce cadre et propose pour ce faire un dispositif et un procédé dans lesquels le conditionnement peut être extrait en dehors des moyens d'arrêt qui le retiennent en position introduite, et ce en déformant son pourtour. Un préjugé constant selon l'état de la technique consiste à penser que c'est un effacement de la butée relativement au conditionnement qui permet l'éjection par gravité. Au contraire, selon l'invention, les moyens d'arrêt et le conditionnement sont libérés l'un de l'autre par déformation du conditionnement lui-même.

Dans un cas préféré, c'est l'une des parties de la chambre d'infusion qui pousse le conditionnement de sorte à le forcer à s'extraire des moyens d'arrêt par déformation de son pourtour. Dans ce cas, la seule pièce mobile est la partie correspondante de la chambre d'infusion apte à pousser sur le conditionnement. Cette phase de poussée permet également avantageusement la fermeture de la chambre d'infusion de sorte qu'un seul mouvement de translation est ici suffisant pour réaliser les phases de mise en place, de fermeture et d'ouverture de la chambre d'infusion puis d'éjection du conditionnement. La poussée sur le conditionnement s'effectue suivant l'axe de la chambre d'infusion, suivant la direction de rapprochement et d'éloignement des deux parties de cette chambre. Ce mouvement contre la rétention des moyens d'arrêt orientés avantageusement perpendiculairement au sens de la poussée.

D'autres buts avantages apparaîtront au cours de la description qui suit qui présente un mode de réalisation préféré à l'invention cependant non limitatif.

Auparavant, il est rappelé que l'invention concerne un dispositif de production de boissons par infusion d'un produit contenu dans un conditionnement, selon la revendication 1:

Suivant des modes de réalisation préférés mais non limitatifs, ce dispositif peut être tel que :
- la mobilité de la partie mobile de la chambre d'infusion est une translation de direction perpendiculaire à l'orientation du conditionnement en position introduite dans la chambre d'infusion.
- les moyens d'arrêt sont fixes et le conditionnement est déplacé par la partie mobile par rapport aux moyens d'arrêt.
- la surface de guidage latéral est formée par une paire de rainures aptes à coopérer avec deux parties du pourtour du conditionnement.
- la surface de butée et la surface de guidage latéral sont formées dans la ou les mêmes pièces ayant deux directions d'application sur le pourtour du conditionnement.
- deux glissières ont une première partie rainurée de guidage latéral du conditionnement et une deuxième partie de butée, lesdites première et deuxième parties de la glissière forment un angle non nul.
- la déformation provoquée par la mobilité de la partie mobile de la chambre d'infusion est une déformation élastique.
- la position introduite du conditionnement est orientée verticalement.
- la mobilité de la partie mobile de la chambre d'infusion assure la fermeture de la chambre d'infusion.
- il comporte un moyen de rappel du conditionnement hors de la deuxième partie de la chambre d'infusion lorsque la partie mobile est éloignée de la deuxième partie.
- la course de l'organe suiveur est plus courte que celle du conditionnement de sorte à le faire passer au-delà des moyens d'arrêt et à ce qu'il soit reçu dans les rainures.
- l'organe suiveur comporte deux rainures orientées parallèlement à la surface de guidage.
- l'organe suiveur est monté contre des moyens de retour élastiques.
- chaque rainure est partiellement délimitée par une surface de l'organe suiveur sur laquelle peut s'appliquer le pourtour du conditionnement sous l'action de la partie mobile.

Est également décrit également un procédé de production de boissons par infusion d'un produit contenu dans un conditionnement dans lequel :
- on introduit le conditionnement dans une chambre d'infusion comportant deux parties configurées pour être rapprochées ou éloignées respectivement pour fermer ou ouvrir la chambre d'infusion ;
- on fixe en position le conditionnement une fois qu'il est introduit dans la chambre d'infusion en appliquant des moyens d'arrêt sur son pourtour ;
caractérisé par le fait qu'on déplace l'une de parties de la chambre d'infusion de sorte à faire passer le conditionnement au-delà des moyens d'arrêt par déformation du pourtour du conditionnement.

Suivant des variantes préférées mais non limitatives, ce procédé est tel que :
- par le déplacement sur la partie mobile, on exerce une poussée sur le conditionnement.
- le déplacement de la partie mobile est poursuivi de sorte à amener le conditionnement vers la deuxième partie de la chambre d'infusion et à fermer la chambre d'infusion
- on introduit le conditionnement suivant une direction sensiblement verticale.
- on utilise un conditionnement présentant un pourtour déformable élastiquement.
- le conditionnement comporte un pourtour aplati entourant un volume de conditionnement de produit à infuser.
- le pourtour comporte un renfort central à base de matière plastique ou de papier cartonné

Les dessins ci-joints sont donnés à titre d'exemples et ne sont pas limitatifs de l'invention. Ils représentent seulement des modes de réalisation de l'invention et permettront de la comprendre aisément.
La figure 1 montre un exemple de conditionnement utilisable dans le cadre de la présente invention en vue de coté et vue de coupe partielle, la figure 2 en montre une vue en perspective.
La figure 3 montre en coupe longitudinale le dispositif de l'invention dans un mode de réalisation avec une phase d'introduction du conditionnement.
La figure 4 montre ce même dispositif dans une phase successive dans laquelle le conditionnement est en position introduite dans une chambre d'infusion.
Les figures 5 à 7 montrent 3 variantes de coopération entre le conditionnement et les moyens d'arrêt, la figure 5 présentant un conditionnement présentant un pourtour sensiblement carré alors que les figures 6 et 7 montrent un conditionnement au pourtour circulaire.
La figure 8 montre en coupe transversale une phase ultérieure de fonctionnement dans laquelle le conditionnement est déplacé relativement aux moyens d'arrêt de sorte à l'en extraire.
La figure 9 montre une vue en coupe transversale de cette même phase.
La figure 10 montre en coupe longitudinale la chambre d'infusion en position fermée.
La figure 11 illustre une phase suivante de fonctionnement dans laquelle le conditionnement est libéré tans des moyens d'arrêt que des parties de la chambre d'infusion de sorte à l'éjecter.
La figure 12 illustre l'éjection par gravité du conditionnement.
Les figures 13 à 17 illustrent une variante du mode de réalisation précédent avec un organe suiveur, suivant des phases successives de fabrication d'une boisson.

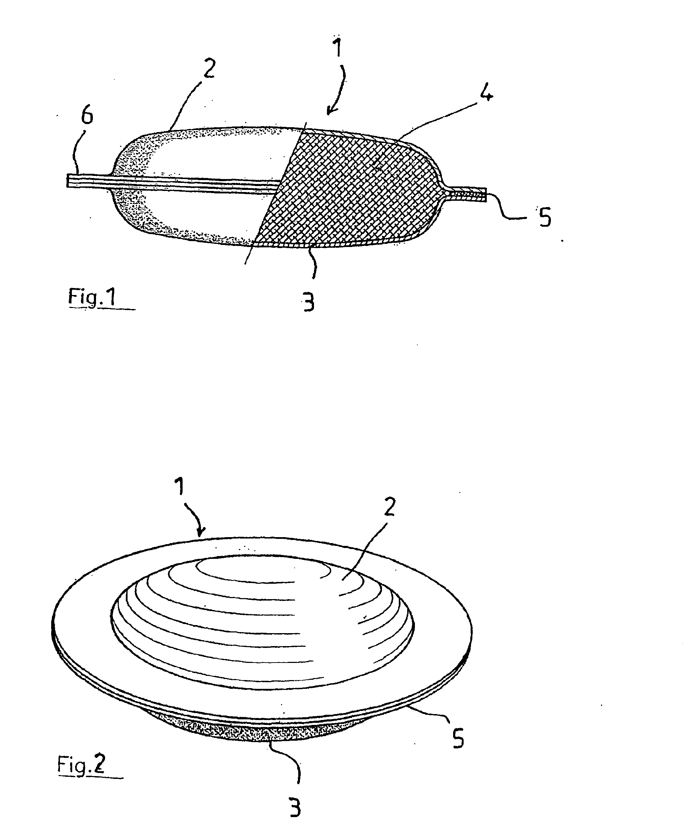

La présente invention est utilisable avec des conditionnements du type présenté dans les figures 1 et 2 bien que cet exemple ne soit pas limitatif. Suivant ces figures, le produit à infuser 4, par exemple de la mouture de café, est renfermé dans le volume intérieur du conditionnement 1 constitué par l'assemblage de deux couches 2,3, jointes par leur périphérie au niveau d'un pourtour 6. Sur le pourtour 6, entre les deux couches 2, un renfort 5 est avantageusement constitué en particulier en papier cartonné recouvert d'un film plastique sur ses deux faces ou encore en matière plastique. L'ensemble ici proposé est symétrique mais cela n'est pas limitatif de l'invention qui peut être utilisé pour d'autres conditionnements.

Les couches 2, 3, sont avantageusement à base de papier filtre de sorte à constituer la matière de filtration du produit à infuser 4. On pourrait également former ces couches de façon imperméable aptes à être transpercées lors de la phase d'infusion.

Le pourtour 6 du conditionnement 1 est configuré de sorte à être déformable avantageusement élastiquement lorsque il subit une pression modérée suivant une direction perpendiculaire au plan de joint des couches 2, 3. On entend par déformation élastique une déformation du type réversible c'est-à-dire dans laquelle le pourtour 6 revient dans sa position initiale après sa déformation. A titre d'exemple, le pourtour peut avoir une largeur de l'ordre de 6 mm et les rainures 13a et 13b, décrites plus loin, une profondeur de l'ordre de 2 à 3 mm. Une déformation irréversible pourrait également être envisagée sans sortir du cadre de l'invention.

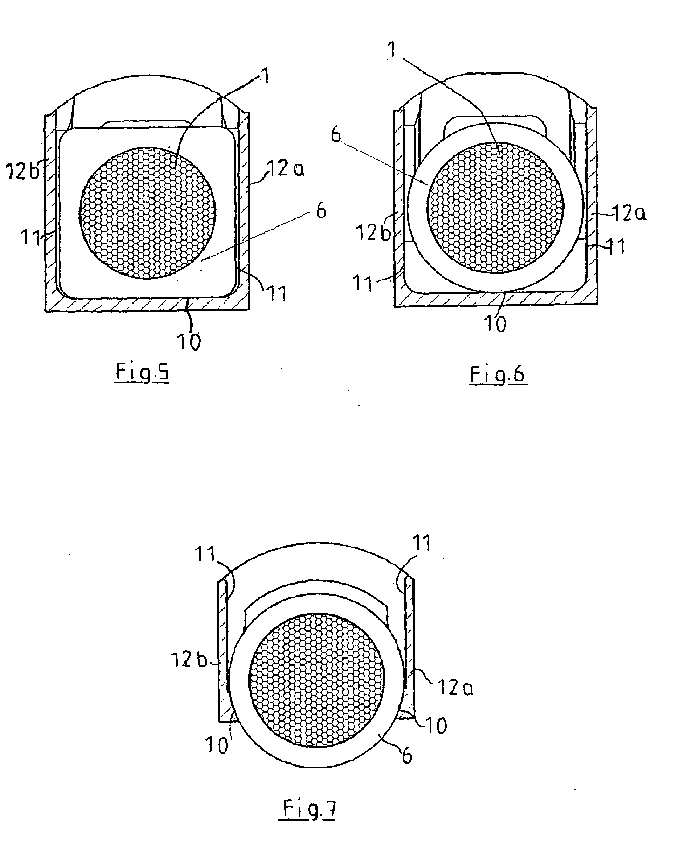

Par ailleurs, les figures 1 et 2 illustrent un conditionnement au pourtour circulaire, le pourtour 6 étant de forme annulaire mais on peut également former un conditionnement présentant une autre forme de périphérie telle que celle illustrée en figure 5 dans laquelle le volume de réception du produit à infuser est de section sensiblement circulaire mais le pourtour 6 présente une bordure sensiblement carrée avec des bords arrondis.

D'une façon générale, on pourra utiliser un conditionnement du type décrit dans le document WOA9507041.

On décrit ci après le fonctionnement du dispositif de l'invention avec une introduction du conditionnement 1 suivant une direction 7 sensiblement verticale alors que l'axe longitudinal de la chambre d'infusion est sensiblement horizontal. Cela étant, cette configuration n'est pas limitative et en particulier une orientation oblique est possible.

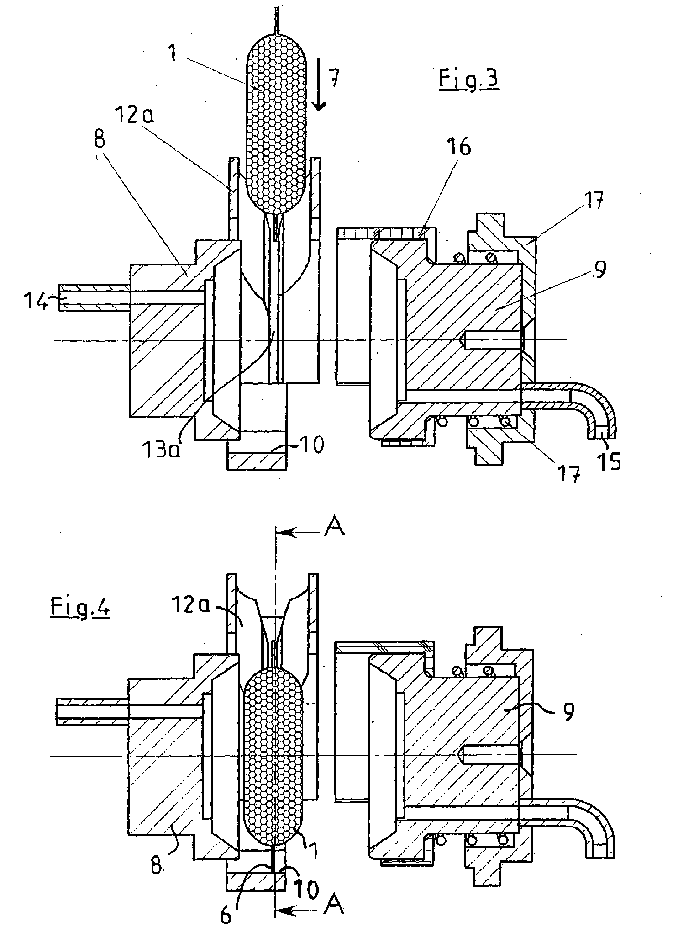

La figure 3 présente la formation d'un dispositif de l'invention avec une chambre d'infusion constituée de deux parties 8,9, dont l'une au moins présente une mobilité.

Les figures présentent une partie mobile 8 alors que la deuxième partie 9 est fixe. La deuxième partie 9 pourrait cependant présenter une mobilité. Les parties 8, 9 sont susceptibles d'un mouvement de rapprochement ou d'éloignement permettant des phases de fermeture et d'ouverture de la chambre d'infusion. Dans le cas illustré, seule la partie 8 est mobile et ce dans un mouvement de translation horizontale.

Le mouvement de la partie immobile 8 peut être engendré par tout moyen courant dont un actionnement manuel d'un levier relié à la partie mobile 8 par des moyens de transmission de puissance par exemple une genouillère, une motorisation, par exemple à vis sans fin, un vérin pneumatique ou hydraulique

Dans le cadre des illustrations, la partie mobile 8, présente une entrée d'eau 14 apte à recevoir l'embouchure d'un circuit d'eau chaude notamment depuis un réservoir en passant par un système de pompe et de chaudière. La deuxième partie 9 présente quant à elle une sortie de boissons 15. En position de fermeture, les parties 8, 9 délimitent un volume de réception du conditionnement 1 étanche. L'étanchéité peut-être réalisé par application des pourtours des parties 8,9 sur le pourtour 6 du conditionnement 1 formant joint ou par des moyens d'étanchéité rapportés.

La figure 3 montre une phase d'introduction du conditionnement 1 suivant la direction 7. Durant cette phase, le conditionnement 1 est guidé de sorte à rester sensiblement vertical par l'intermédiaire de surface de guidage latéral 11 ici formée dans des glissières 12a, 12b, formées de part et d'autre de la chambre d'infusion avec une orientation verticale. Les glissières 12a, 12b, comportent chacune une rainure 13a,13b, apte à coopérer avec le pourtour 6 du conditionnement 1 formant ainsi les surfaces de guidage 11.

En phase d'introduction, le conditionnement 1 est ainsi guidé jusqu'à parvenir à une surface de butée 10 représentée dans le cadre de la figure 3 par une partie plane située en dessous des glissières 12 a, 12 b, de sorte à recevoir la bordure inférieure du pourtour 6 du conditionnement 1.

L'ensemble de ces surfaces de butée 10 et de guidage latéral 11 forment des moyens d'arrêt du conditionnement 1. Ces moyens d'arrêt coopèrent avec le conditionnement 1 dans la phase d'introduction et dans la position introduite du conditionnement tel que visible en figure 4.

Dans cette position, les moyens d'arrêt maintiennent l'orientation verticale du conditionnement 1.

Les figures 5 à 7 illustrent diverses variantes de réalisation de moyens d'arrêt notamment suivant la configuration du pourtour 6 du conditionnement 1. Ainsi, la figure 5 montre une configuration carrée coopérant avec une surface de butée 10 inférieure et une surface de guidage latéral 11 formée en deux parties d'une part dans une glissière 12 a et d'autre part dans une glissière 12 b, formée de part et d'autre des bordures verticales du pourtour 6.

La figure 6 montre une configuration semblable des surfaces de butée 10 et de guidage latéral 11 mais en coopération avec un pourtour 6 de forme circulaire.

La figure 7 montre une autre possibilité de réalisation des surfaces 10 et 11 en utilisant une même pièce pour la réalisation de ces deux surfaces de part et d'autre du conditionnement 1. Plus précisément, les glissières 12 a, 12 b comportent une portion verticale de réalisation d'une surface de guidage latérale 11 et une partie oblique formant la surface de butée 10. L'angle réalisé entre les surfaces 10 et 11 assure la rétention du conditionnement 6 suivant deux orientations de sorte à le maintenir à la fois verticalement et éviter sa chute.

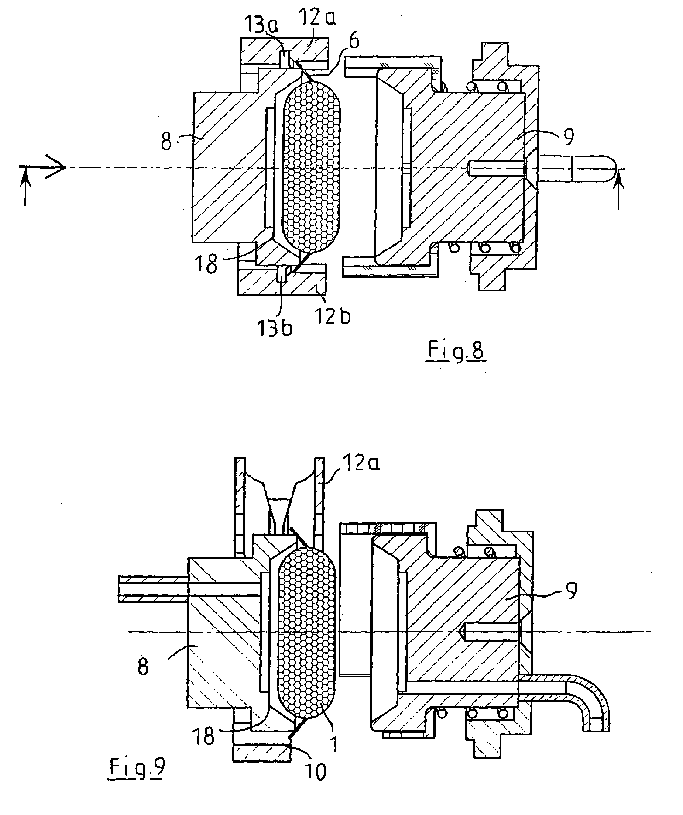

Comme indiqué précédemment, la partie 8 est avantageusement mobile en translation et, dans le cas représenté, permet d'appliquer un effort de poussée sur le conditionnement 1. Cette poussée induit une sortie du pourtour 6 du conditionnement 1 en dehors des moyens d'arrêt et notamment en dehors des surfaces de guidage latérales 11 par exemple constituées par les rainures 13 a, 13 b apparaissant en figure 8. Suivant une possibilité non illustrée, la partie mobile 8 déplace non pas le conditionnement 1 mais les moyens d'arrêt.

Dans le mode de réalisation illustrée, la poussée de la partie 8 est horizontale et déplace le conditionnement 1 qui est extrait des rainures 13 a, 13 b. Dans le même temps, le conditionnement 1 coopère avec une portion en coupelle 18 de la partie 8. La coupelle a avantageusement sensiblement une forme coopérante avec la forme de l'une des faces du conditionnement 1. Dans cette phase, la partie mobile 8 assure le relais quant au maintien en position du conditionnement 1. La figure 9 montre une vue longitudinale de la phase de poussée correspondant à la figure 8.

On règlera l'écartement entre les parties 8 et 9 de la chambre d'infusion de sorte à prévenir toute chute par gravité du conditionnement 1 en phase de fermeture de la chambre d'infusion entre la sortie du pourtour 6 des moyens d'arrêt et l'accostage sur la partie 9.

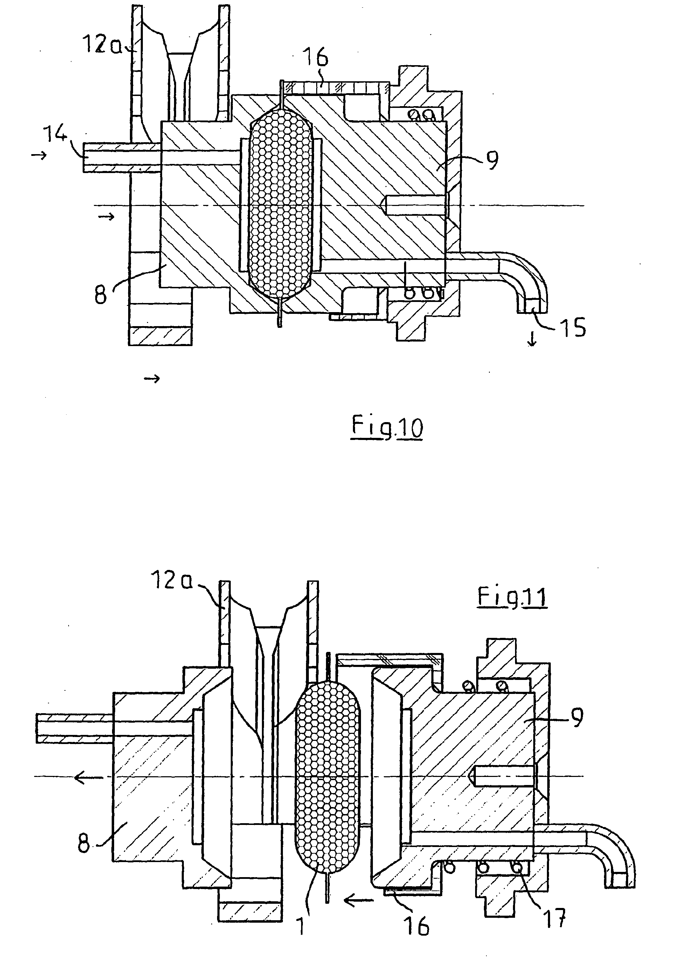

La poursuite du déplacement de la partie mobile 8 permet de parvenir jusqu'à la position illustrée en figure 10 dans laquelle la chambre d'infusion est fermée et dans laquelle peut se produire la circulation de fluide depuis l'entrée d'eau 14 jusqu'à la sortie de boisson 15 en réalisant une infusion de type conventionnel.

On notera que, dans cette position, le conditionnement 1 est décalé longitudinalement relativement aux moyens d'arrêt.

La figure 11 illustre un mouvement de retrait de la partie mobile 8 apte à ré ouvrir la chambre d'infusion et à libérer le conditionnement 1. Celui-ci étant décalé longitudinalement par rapport aux moyens d'arrêt, il peut être évacué par simple gravité.

Avantageusement, on utilise un moyen de rappel 16 pour éviter la rétention par adhérence du conditionnement 1 après son application contre la partie 9.

Dans l'exemple illustré, le moyen de rappel 16 est constitué par une surface d'application sur le pourtour 6 du conditionnement 1 en opposition au mouvement de fermeture de la chambre d'infusion. Lors de la poussée de la partie mobile 8, le moyen de rappel 16 est enfoncé à l'encontre d'un ressort 17 jusqu'à une position escamotée visible en figure 10.

Lorsque la partie 8 est reculée, le moyen de rappel 16 revient en position et induit un mouvement de séparation entre le conditionnement 1 et la partie 9. De cette façon, aucun risque de collage entre le conditionnement 1 et la partie 9 ne se produit.

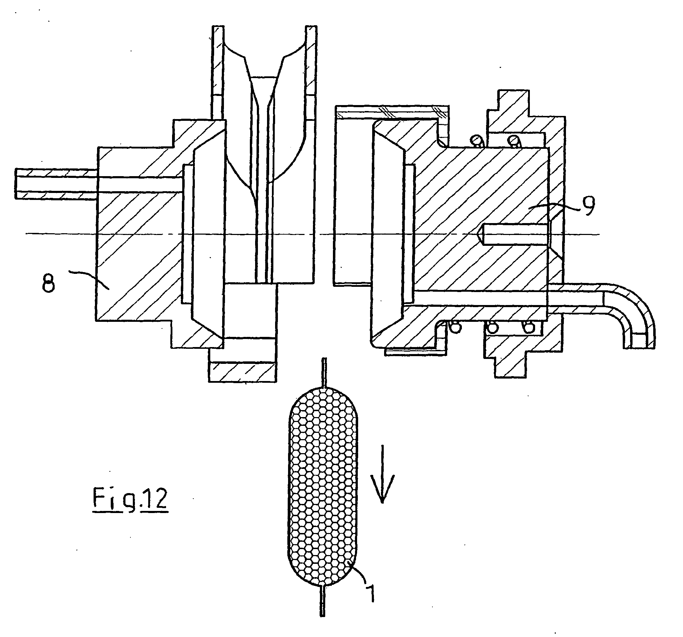

De ce fait, la chute du conditionnement 1 s'effectue avec une grande fiabilité comme cela ressort de la figure 12.

On notera que l'ensemble de ces phases est réalisé avec un seul mouvement de translation longitudinale tant de la partie mobile 8 que du conditionnement 1. Aucune autre mobilité que celle de la partie 8 n'est nécessaire à la réalisation de l'ensemble des phases d'ouverture et de fermeture de la chambre d'infusion. Cela simplifie grandement la conception de l'ensemble et le choix des moyens de mise en mouvement de la partie mobile 8.

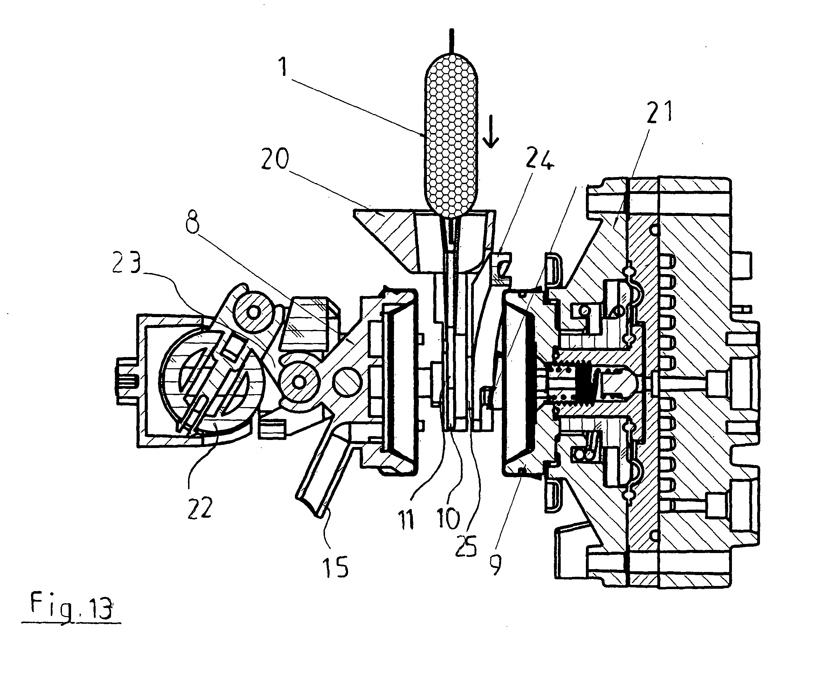

On décrit ci-après un deuxième mode de réalisation du dispositif de l'invention en référence aux figures 13 à 17.

Comme dans le cas précédent, une partie mobile 8 et une deuxième partie 9 sont mises en oeuvre en se faisant face. La partie mobile 8 est actionnée dans un mouvement de translation dans le sens longitudinal du dispositif par l'intermédiaire d'un dispositif de transmission de puissance mécanique utilisant un arbre 22 et une biellette 23. L'entraînement en rotation de l'arbre 22 par le jeu de l'articulation de la biellette 23 déplace la partie mobile 8 pour la rapprocher ou l'éloigner de la partie 9. Le mouvement de la partie mobile 8 est avantageusement guidé le long de deux tiges 28a, 28b parallèles à l'axe longitudinal.

Les moyens d'arrêt sont constitués de façon similaire à l'illustration de la figure 7 et ils comprennent deux éléments de glissière réalisés de part et d'autre d'un volume de réception du conditionnement 1 et permettant de s'appliquer sur le pourtour 6 du conditionnement 1 à un endroit différant de la partie la plus basse du pourtour 6. Aucun obstacle n'est donc formé en dessous du conditionnement 1.

Dans le mode de réalisation des figures 13 à 17, un organe suiveur avantageusement commun aux deux parties latérales du dispositif est utilisé. Cet organe suiveur se déplace de façon similaire au conditionnement 1 par l'action de la partie mobile 8 et dispose d'une surface d'appui 26 apte à s'appliquer sur le pourtour 6 du conditionnement 1 pour l'éloigner de la partie 9 de la chambre d'infusion lorsque l'infusion est terminée. Ce faisant l'organe suiveur 24 remplace le moyen de rappel 16 du mode de réalisation précédent.

A titre préféré, l'organe suiveur 24 comporte une surface constituant la surface avant des rainures 13a, 13b de la surface de guidage latéral 11 des moyens d'arrêt. Les moyens d'arrêt sont alors formés pour partie dans un élément fixe ici solidaire d'une bouche 20 d'introduction de la dosette et pour partie dans un élément mobile constitué par l'organe suiveur 24.

De façon complémentaire ou de façon alternative, l'organe suiveur 24 peut présenter une ou avantageusement deux rainures 25 configurées pour recevoir le pourtour 6 du conditionnement 1 lorsque celui-ci est passé au-delà des moyens d'arrêt. On forme ainsi un ensemble à deux positions successives pour le conditionnement 1. Une première position, correspondant au plan d'introduction du conditionnement 1 relativement à l'axe de la machine, est déterminé par les moyens d'arrêt. Une deuxième position située dans un plan parallèle au précédent mais rapproché relativement à la partie 9 de la chambre d'infusion est définie par les rainures 25 de l'organe suiveur 24 et se déplace vers la deuxième partie 9 lors de l'actionnement de la partie mobile 8.

On comprend aisément que la ou les rainures 25 permettent de guider le conditionnement une fois qu'il a passé les moyens d'arrêt durant la phase d'accostage sur la deuxième partie 9, d'infusion, et de rétractation de la partie mobile 8 engendrant le dévêtissage du conditionnement 1 en dehors de la partie 9 grâce au retour en position de l'organe suiveur 24. Ce retour en position est permis par des moyens de rappel ici illustrés sous forme de deux ressorts 27 en opposition desquels l'organe suiveur 24 est monté en translation sur les tiges 28a, 28b.

Les figures 13 à 17 présentent des phases successives de mise en oeuvre de ce dispositif. En figure 3, le conditionnement 1 est introduit au niveau d'une bouche 20 ici monobloc avec la surface arrière des rainures 13a, 13b constituant la surface de guidage latéral des moyens de butée. En fin d'introduction, le pourtour 6 du conditionnement 1 s'applique sur la surface de butée 10 évitant sa chute par gravité et est guidé par la surface latérale 11. Suivant une réalisation préférée, la surface avant de la surface de guidage latéral 11 est réalisé sur l'organe suiveur 24.

Lorsque l'arbre 22 est actionné en rotation, un déplacement de la partie mobile 8 est produit suivant une translation d'axe longitudinal relativement au dispositif. La partie mobile 8 s'applique sur le conditionnement 1 et l'entraîne dans son mouvement ainsi que l'organe suiveur 24.

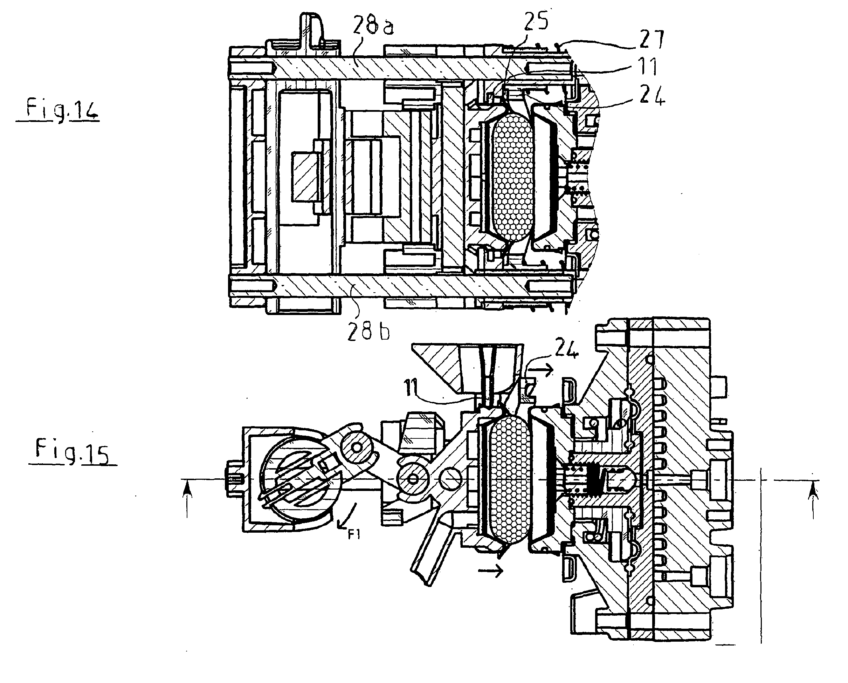

Ce mouvement progressif est illustré aux figures 14 et 15 où l'on constate une déformation du pourtour du conditionnement 1 de sorte à s'échapper de la surface de guidage latéral 11 jusqu'à parvenir aux rainures 25 formées sur l'organe suiveur 24.

D'abord plaqué contre l'organe suiveur 24 qu'il entraîne dans son mouvement, le pourtour 6 passe vers les rainures 25 lorsque l'organe suiveur est en fin de course.

Durant ces phases, les moyens de rappel 27 sont comprimés.

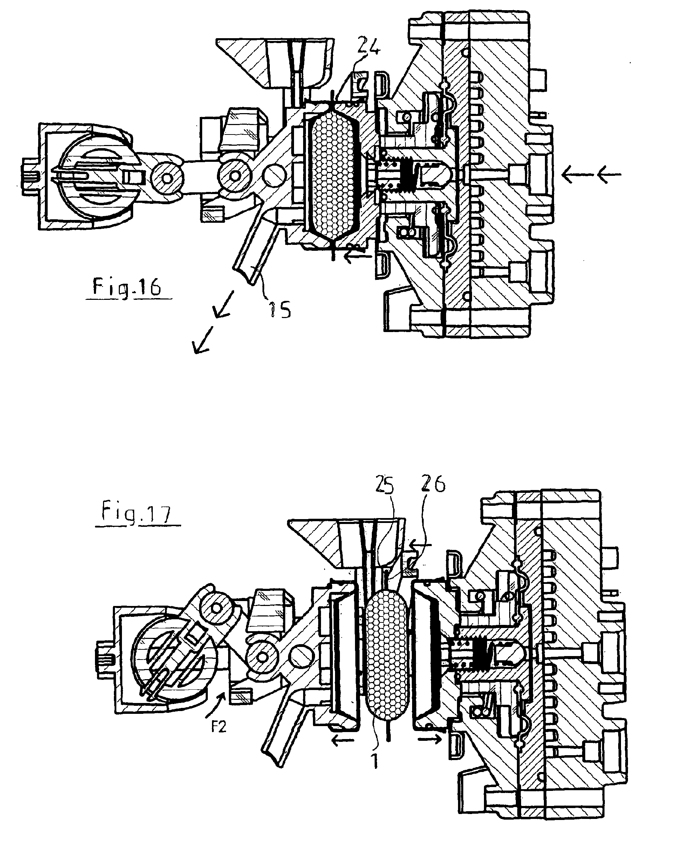

La phase de production de boisson est illustrée en figure 16, on y constate très nettement que le conditionnement 1 s'est échappé des moyens d'arrêt.

En fin de cycle, la partie mobile 8 est éloignée de la partie 9 ce qui sous l'effet des ressorts 27 engendre un rappel de l'organe suiveur 24 et par conséquent du conditionnement 1 puisque celui-ci est maintenu dans les rainures 25.

Cela étant le conditionnement 1 est maintenant en position décalée relativement aux moyens d'arrêt si bien que rien ne s'oppose à sa chute par gravité à ce stade.

### REFERENCES

1- conditionnement
2- couche
3- couche
4- produit à infuser
5- renfort
6- pourtour
7- direction d'introduction
8- partie mobile
9- deuxième partie
10- surface de butée
11- surface de guidage latéral
12 a, 12 b- glissière
13 a, 13 b- rainure
14- entrée d'eau
15- sortie de boisson
16- moyen de rappel
17- ressort
18- coupelle
20- bouche
21- corps
22- arbre
23- biellette
24- organe suiveur
25- rainure
26- surface d'appui
27- ressort
28- tige

## Revendications

1. Dispositif de production de boissons par infusion d'un produit contenu dans un conditionnement (1), présentant :
- une chambre d'infusion apte à recevoir le conditionnement (1), ladite chambre comportant deux parties configurées pour être rapprochées ou éloignées respectivement pour fermer ou ouvrir la chambre d'infusion ;
- des moyens d'arrêt du conditionnement (1) aptes à s'appliquer sur le pourtour (6) du conditionnement (1) dans une position introduite dans la chambre d'infusion et comportant une surface de butée (10) s'opposant à la chute par gravité du conditionnement (1) et une surface de guidage latéral (11) l'une des parties de la chambre d'infusion ayant une mobilité apte à faire passer le conditionnement (1) au-delà de la surface de guidage latérale (11) par déformation du pourtour (6) du conditionnement (1) et au-delà de la surface de butée, **caractérisé par le fait qu'**il comporte un organe suiveur (24) entraîné par la partie mobile (8) et pourvu d'au moins une rainure (25) configurée pour recevoir le pourtour du conditionnement (1) lorsque ce dernier est passé au-delà des moyens d'arrêt.

2. Dispositif selon la revendication 1 dans lequel la mobilité de la partie mobile (8) de la chambre d'infusion est une translation de direction perpendiculaire à l'orientation du conditionnement (1) en position introduite dans la chambre d'infusion.

3. Dispositif selon l'une des revendications précédentes dans lequel la surface de guidage latéral (11) est formée par une paire de rainures (13a, 13b) aptes à coopérer avec deux parties du pourtour (6) du conditionnement (1).

4. Dispositif selon l'une des revendications précédentes dans lequel la surface de butée (10) et la surface de guidage latéral (11) sont formées dans la ou les mêmes pièces ayant deux directions d'application sur le pourtour (6) du conditionnement (1).

5. Dispositif selon la revendication 4 comportant deux glissières ayant une première partie rainurée de guidage latéral du conditionnement (1) et une deuxième partie de butée, lesdites première et deuxième parties de la glissière formant un angle non nul.

6. Dispositif selon l'une des revendications précédentes dans lequel les moyens d'arrêt sont fixes et dans lequel le conditionnement (1) est déplacé par la partie mobile (8) par rapport aux moyens d'arrêt.

7. Dispositif selon l'une des revendications précédentes dans lequel la course de l'organe suiveur (24) est plus courte que celle du conditionnement (1) de sorte à le faire passer au-delà des moyens d'arrêt et à ce qu'il soit reçu dans les rainures (25).

8. Dispositif selon l'une des revendications précédentes dans lequel l'organe suiveur (24) comporte deux rainures (25) orientées parallèlement à la surface de guidage (11).

9. Dispositif selon l'une des revendications précédentes dans lequel l'organe suiveur (24) est monté contre des moyens de retour élastiques.

10. Dispositif selon la revendication 3 seule ou en combinaison avec l'une des revendications 7 à 9 dans lequel chaque rainure (13a, 13b) est partiellement délimitée par une surface de l'organe suiveur (24) sur laquelle peut s'appliquer le pourtour (6) du conditionnement (1) sous l'action de la partie mobile (8).

11. Dispositif selon l'une quelconque des revendications 1 à 10 dans lequel la déformation provoquée par la mobilité de la partie mobile (8) de la chambre d'infusion est une déformation élastique.

12. Dispositif selon l'une quelconque des revendications 1 à 11 dans lequel la position introduite du conditionnement est orientée verticalement.

13. Dispositif selon l'une quelconque des revendications 1 à 12 dans lequel la mobilité de la partie mobile (8) de la chambre d'infusion assure la fermeture de la chambre d'infusion.

14. Dispositif selon la revendication 13 comportant un moyen de rappel (16, 24) du conditionnement (1) hors de la deuxième partie (9) de la chambre d'infusion lorsque la partie mobile(8) est éloignée de la deuxième partie (9).

## Claims

1. Device for producing drinks by brewing a product contained in a package (1), comprising:
- a brewing chamber capable of receiving package (1), the said chamber comprising two parts configured to move towards or away from each other, respectively to close or open the brewing chamber;
- stopping means for package (1) capable of applying on perimeter (6) of package (1) in an introduced position into the brewing chamber and comprising a stop surface (10) preventing package (1) from falling by gravity and a lateral guide surface (11) ;
- one of the parts of the brewing chamber is mobile so that it is capable of moving package (1) past lateral guide surface (11) by deformation of perimeter (6) of package (1) and beyond the stop surface **characterised in that** it comprises a follower unit (24) driven by the mobile part (8) and provided with at least one groove (25) configured to receive the perimeter of the package (1) when the latter has moved past the stopping means.

2. Device according to Claim 1 in which the mobility of mobile part (8) of the brewing chamber is of a translation in a direction perpendicular to the orientation of package (1) in an introduced position into the brewing chamber.

3. Device according to one of the preceding claims in which lateral guide surface (11) is formed by a pair of grooves (13a, 13b) which are capable of coacting with two parts of perimeter (6) of package (1).

4. Device according to one of the preceding claims in which stop surface (10) and lateral guide surface (11) are formed in the same part or parts having two directions of application on perimeter (6) of package (1).

5. Device according to Claim 4 comprising two slides having a first grooved part for lateral guiding of package (1) and a second stop part, the said first and second parts of the slide forming a non-zero angle.

6. Device according to one of the preceding claims in which the stopping means are fixed and package (1) is moved by mobile part (8) in relation to the stopping means.

7. Device according to one of the preceding claims in which the travel of follower unit (24) is shorter than that of package (1) so as to move it past the stopping means and so that it is received in grooves (25).

8. Device according to one of the preceding claims in which follower unit (24) comprises two grooves (25) oriented parallel to guide surface (11).

9. Device according to one of the preceding claims in which follower unit (24) is mounted against elastic return means.

10. Device according to Claim 3 alone or in combination with one of Claims 7 to 9 in which each groove (13a, 13b) is partially delimited by a surface of follower unit (24) on which perimeter (6) of package (1) may be applied under the action of mobile part (8).

11. Device according to any one of Claims 1 to 10 in which the deformation caused by the mobility of mobile part (8) of the brewing chamber is an elastic deformation.

12. Device according to any one of Claims 1 to 11 in which the introduced position of the package is oriented vertically.

13. Device according to any one of Claims 1 to 12 in which the mobility of mobile part (8) of the brewing chamber ensures the closure of the brewing chamber.

14. Device according to Claim 13 comprising a return means (16, 24) for package (1) outside second part (9) of the brewing chamber when mobile part (8) is away from second part (9).

## Patentansprüche

1. Getränkeproduktionsvorrichtung per Aufguss eines in einer Verpackung enthaltenen Produkts (1), die Folgendes enthält:
- eine Aufgusskammer, die geeignet ist, die Verpackung (1) aufzunehmen, wobei die genannte Kammer zwei Teile umfasst, die konfiguriert sind, um jeweils zum Schließen oder Öffnen der Aufgusskammer angenähert oder entfernt zu werden;
- Feststellmittel der Verpackung (1), die geeignet sind, auf den Umfang (6) der Verpackung (1) in einer in die Aufgusskammer eingeführten Position angewendet zu werden, und die eine Anschlagsfläche (10), die den Absturz der Verpackung (1) durch Schwerkraft verhindert, und eine laterale Führfläche (11) umfassen, wobei eine der Aufgusskammern eine Mobilität hat, die geeignet ist, die Verpackung (1) über die laterale Führfläche (11) hinaus per Verformung der Umrandung (6) der Verpackung (1) und über die Anschlagsfläche hinaus zu führen, **gekennzeichnet durch** die Tatsache, dass sie ein Folgerorgan (24) umfasst, das **durch** den mobilen Teil (8) angetrieben wird und wenigstens mit einer Rille (25) versehen ist, die konfiguriert ist, um den Umfang der Verpackung (1) aufzunehmen, wenn diese über die Feststellmittel hinweg geführt ist.

2. Vorrichtung gemäß Anspruch 1, in der die Mobilität des mobilen Teils (8) der Aufgusskammer eine Translation in lotrechter Richtung zur Ausrichtung der Verpackung (1) in der in die Aufgusskammer eingeführte Position ist.

3. Vorrichtung gemäß einem der vorherigen Ansprüche, in der die laterale Führfläche (11) durch ein Rillenpaar (13a, 13b) gebildet wird, das geeignet ist, um mit zwei Teilen des Umfangs (6) der Verpackung (1) zusammenzuwirken.

4. Vorrichtung gemäß einem der vorherigen Ansprüche, in der die Anschlagsfläche (10) und die laterale Führfläche (11) in demselben oder denselben Teil(en) gebildet sind, die zwei Anwendungsrichtungen auf dem Umfang (6) der Verpackung (1) haben.

5. Vorrichtung gemäß Anspruch 4, die zwei Gleitschienen mit einem ersten gerillten lateralen Führungsteil der Verpackung (1) und einen zweiten Anschlagsteil haben, wobei die genannten ersten und zweiten Teile der Gleitschiene einen Winkel ungleich Null bilden.

6. Vorrichtung gemäß einem der vorherigen Ansprüche, in der die Feststellmittel fest sind und in dem die Verpackung (1) durch den mobilen Teil (8) im Verhältnis zu den Feststellmitteln versetzt ist.

7. Vorrichtung gemäß einem der vorherigen Ansprüche, in der der Lauf des Folgerorgans (24) kürzer ist als der der Verpackung (1), so dass dieses über die Feststellmittel hinweg geführt wird und dass es in den Rillen (25) aufgenommen wird.

8. Vorrichtung gemäß einem der vorherigen Ansprüche, in der das Folgerorgan (24) zwei Rillen (25) umfasst, die parallel zur Führfläche (11) ausgerichtet sind.

9. Vorrichtung gemäß einem der vorherigen Ansprüche, in der das Folgerorgan (24) gegen elastische Rückführmittel angebracht ist.

10. Vorrichtung gemäß Anspruch 3 alleine oder in Kombination mit einem der Ansprüche 7 bis 9, in der jede Rille (13a, 13b) parallel durch eine Fläche des Folgerorgans (24) begrenzt wird, auf der der Umfang (6) der Verpackung (1) unter der Wirkung des mobilen Teils (8) angewendet werden kann.

11. Vorrichtung gemäß Anspruch 1 bis 10, in der die durch die Mobilität des mobilen Teils (8) der Aufgusskammer hervorgerufene Verformung eine elastische Verformung ist.

12. Vorrichtung gemäß Anspruch 1 bis 11, in der die eingeführte Position der Verpackung vertikal ausgerichtet ist.

13. Vorrichtung gemäß Anspruch 1 bis 12, in der die Mobilität des mobilen Teils (8) der Aufgusskammer den Verschluss der Aufgusskammer gewährleistet.

14. Vorrichtung gemäß Anspruch 13, die ein Rückholmittel (16, 24) der Verpackung (1) außerhalb des zweiten Teils (9) der Aufgusskammer umfasst, wenn der mobile Teil (8) vom zweiten Teil (9) entfernt ist.
